# EUROPEAN PATENT APPLICATION

(11) **EP 4 418 721 A1**
(43) Date of publication of application: **21.08.2024**
(21) Application number: 23777768.5
(22) Date of filing: 06.03.2023
(51) Int. Cl.: H04W 24/04

(54) **BASE STATION VERSION DOWNLOADING METHOD, NETWORK MANAGEMENT SERVER, BASE STATION, DEVICE AND MEDIUM**

(30) Priority: 28.03.2022 CN 202210314165
(71) Applicant: ZTE Corporation, Shenzhen, Guangdong 518057 (CN)
(72) Inventor: JIA, Xiaolong, Shenzhen, Guangdong 518057 (CN); XU, Jiqian, Shenzhen, Guangdong 518057 (CN); ZHENG, Peng, Shenzhen, Guangdong 518057 (CN); GUO, Xianqing, Shenzhen, Guangdong 518057 (CN); WANG, Kang, Shenzhen, Guangdong 518057 (CN); ZHENG, Liang, Shenzhen, Guangdong 518057 (CN)
(74) Representative: Osterhoff, Utz
(86) International application number: PCT/CN2023/079937
(87) International publication number: WO 2023/185390

(57) **Abstract**

The present application relates to the technical field of wireless communication and discloses a method for downloading a base station version, a network management server, a base station, a device and a medium. In the present application, the method for downloading the base station version, applied to the network management server, includes: selecting a first base station among all base stations and providing a base station version for the first base station to download; after receiving a message that the base station version is successfully downloaded reported by the first base station, adding the first base station to a seed base station list; scheduling the base station to be downloaded to download the base station version through the base station in the seed base station list, and after receiving the message that the base station version is successfully downloaded reported by the base station to be downloaded, adding the base station to be downloaded to the seed base station list.

## Description

### CROSS-REFERENCES TO RELATED APPLICATIONS

The present application claims priority to Chinese Patent Application NO. 202210314165.0, filed on March 28, 2022.

### TECHNICAL FIELD

The present application relates to the technical field of wireless communication, and in particular to a method for downloading a base station version, a network management server, a base station, a device and a medium.

### BACKGROUND

A base station in the wireless communication network has high software and hardware integration and powerful functions. In order to meet the deployment needs of different operators and scenarios, the base station generally needs to support 2G/3G/4G/5G standards at the same time. In addition, the base station must be supported by a powerful software version. At the same time, in order to support the latest functions and meet the needs of continuous upgrades, the base station version also needs to be frequently upgraded with the rapid innovation of technology.

Currently, the traditional download solution is commonly used in the field of wireless network technology to upgrade base station versions, that is, all base stations download software versions from the network management server. However, because the version package becomes larger and larger with the evolution of the base station software version, and the network management egress bandwidth resources are limited (many outfield manufacturers and multiple sets of network management are deployed in the same network management room, sharing the egress bandwidth), resulting in very slow speed and long time when downloading the software version in batches. In fact, most of the time for base station software version upgrades is spent on version downloading.

In addition, the traditional base station version download solution has relatively low download efficiency, generally 6h to 9h/2000 stations. When deploying the version on a field scale, the number of sites upgraded every day is 2,000 to 3,000. That is, generally speaking, version downloading is carried out during the day. At the same time, because the base station version download takes a long time, operators need to take turns to monitor the version download, so that when an abnormal download occurs, the operator can handle the abnormal download site in a timely manner. Furthermore, downloading a large number of versions will occupy a large amount of network management resources, including network management export bandwidth, which will have an impact on on-site base station activation, daily operation and maintenance, etc., which will in turn result in huge consumption of on-site manpower resources.

It can be seen that the traditional method for downloading a base station version has problems such as slow download speed, low download efficiency, consumption of a lot of human resources and network management resources, which need to be optimized and solved urgently.

### SUMMARY

The purpose of the present application is to provide a method for downloading a base station version, a network management server, a base station, a device and a medium, so as to increase the speed for downloading the base station version, improve the efficiency for downloading the base station version, and at the same time save the manpower resources and network management resources required to download the base station version.

In order to solve the above problem, an embodiment of the present application provides a method for downloading a base station version, applied to the network management server, including: selecting a first base station among all base stations and providing a base station version for the first base station to download; after receiving a message that the base station version is successfully downloaded reported by the first base station, adding the first base station to a seed base station list; and scheduling a base station to be downloaded to download the base station version through the base station in the seed base station list, and after receiving the message that the base station version is successfully downloaded reported by the base station to be downloaded, adding the base station to be downloaded to the seed base station list.

In order to solve the above problem, an embodiment of the present application provides a method for downloading a base station version, applied to a base station, including: downloading, through a network management server, a base station version; reporting a message that the base station version is successfully downloaded to the network management server, so that the network management server adds the base station to a seed base station list; and providing the downloaded base station version for a base station to be downloaded to download the base station version through the base station, after successfully downloading the base station version, the base station to be downloaded is added to the seed base station list.

In order to solve the above problem, an embodiment of the present application also provides a network management server, including: a selection and provision module, configured to select a first base station among all base stations and provide a base station version for the first base station to download; a seed base station determination module, configured to add the first base station to a seed base station list after receiving a message that the base station version is successfully downloaded reported by the first base station; and a download scheduling module, configured to schedule a base station to be downloaded to download the base station version through a base station in the seed base station list, and add the base station to be downloaded to the seed base station list after receiving the message that the base station version is successfully downloaded reported by the base station to be downloaded.

In order to solve the above problem, an embodiment of the present application also provides a base station, including: a base station version download module, configured to download a base station version through a network management server; a message reporting module, configured to report a message that the base station version is successfully downloaded to the network management server, so that the network management server adds the base station to a seed base station list; and a base station version providing module, configured to provide the downloaded base station version for a base station to be downloaded to download the base station version through the base station, after successfully downloading the base station version, the base station to be downloaded is added to the seed base station list.

An embodiment of the present application also provides an electronic device, including: at least one processor; and a memory communicated with the at least one processor. An instruction executable by the at least one processor is stored in the memory and is executed by the at least one processor to allow the at least one processor to perform the method for downloading the base station version as described above.

An embodiment of the present application also provides a computer-readable storage medium on which a computer program is stored, and when the computer program is executed by a processor, the method for downloading the base station version as described above is implemented.

In the embodiment of the present application, the network management server selects the first base station among all base stations and provides the base station version for the first base station to download. After receiving the message that the base station version is successfully downloaded reported by the first base station, the network management server adds the first base station to the seed base station list, and then schedules the base stations to be downloaded to download the base station version through the base stations in the seed base station list. Only some of the selected base stations are allowed to download the base station version through the network management server, so that the remaining base stations to be downloaded download the base station version through the base stations in the seed base station list. Compared with the traditional method in which all the base stations download the base station version through the network management server, the export resources of the network management server can be effectively saved. In addition, compared with the download method where a large number of base stations occupy network management export resources, it can also effectively increase the download speed. In addition, after receiving the message that the base station version is successfully downloaded reported by the base station to be downloaded, the network management server adds the base station to be downloaded to the seed base station list. This enables the base stations that have completed downloading the base station version to become seed base stations that provide base station versions for download, thereby enabling each base station to be downloaded to simultaneously download the base station version through multiple base stations in the seed base station list. It can significantly shorten the time required to download the base station version and improve the download efficiency of base station version. Furthermore, the above process does not require the participation of technical personnel and can greatly reduce the consumption of manpower.

### BRIEF DESCRIPTION OF THE DRAWINGS

One or more embodiments are exemplified by the corresponding drawings, and these illustrative description do not constitute limitations to the embodiments. Elements with the same reference signs in the drawings are represented as similar elements. Unless otherwise stated, the figures in the drawings are not intended to be limited to scale.
FIG. 1 is a flow chart of a method for downloading a base station version applied to a network management server according to an embodiment of the present application.
FIG. 2 is a flow chart of an interactive method for downloading a base station version according to an embodiment of the present application.
FIG. 3 is a schematic diagram of base station grouping in a first grouping method according to an embodiment of the present application.
FIG. 4 is a schematic diagram of base station grouping in a second grouping method according to an embodiment of the present application.
FIG. 5 is a flow chart of the method for downloading the base station version applied to a base station according to an embodiment of the present application.
FIG. 6 is a schematic structural diagram of a network management server according to an embodiment of the present application.
FIG. 7 is a schematic structural diagram of a base station according to an embodiment of the present application.
FIG. 8 is a schematic structural diagram of an electronic device according to another embodiment of the present application.

### DETAILED DESCRIPTION OF THE EMBODIMENTS

In order to make the purpose, technical solutions and advantages of embodiments of the present application clearer, the embodiments of the present application will be described in detail below in conjunction with the accompanying drawings. However, those skilled in the art can understand that in each embodiment of the present application, many technical details are provided to enable readers to better understand the present application. However, even without these technical details and various changes and modifications based on the following embodiments, the technical solution claimed in the present application can also be implemented.

An embodiment of the present application relates to a method for downloading a base station version, which is applied to a network management server.

In this embodiment, the network management server selects a first base station among all base stations and provides a base station version for the first base station to download. After receiving the message that the download of the base station version is successful reported by the first base station, the network management server adds the first base station to a seed base station list. The base station to be downloaded is scheduled to download the base station version through the base station in the seed base station list, and after receiving the message that the base station version is successfully downloaded reported by the base station to be downloaded, the base station to be downloaded is added to the seed base station list.

In actual implementation, the network management server can be set to have two download modes: ordinary network management download and seed base station download. When the network management server creates a base station version download task and determines the download method as the seed base station download, the network management server performs the method for downloading the base station version described in this embodiment. If the network management server creates a base station version download task and determines the download method as the ordinary network management download, the network management server performs the traditional method for downloading the base station version, that is, all base stations download the base station version through the network management server.

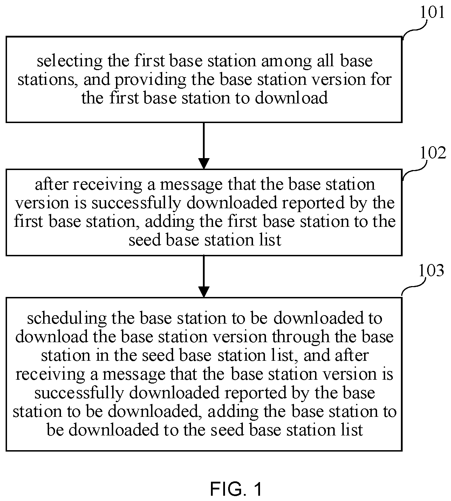

The implementation details of the method for downloading the base station version in this embodiment will be described in detail below. The following content is only for the convenience of understanding the implementation details of this solution and is not necessary for implementing this solution. The specific process is shown in FIG. 1, which can include the following steps:
step 101, selecting the first base station among all base stations, and providing the base station version for the first base station to download.

The first base station involved in this step is only a part of all base stations. Correspondingly, only some of the base stations among all base stations are downloaded through the network management server. Therefore, compared with the traditional method in which all base stations download the base station version through the network management server, the export resources of the network management server can be effectively saved.

When the network management server has limited export resources, the network management server can also divide all selected first base stations into multiple batches, and schedule the first base stations in batches to download base station versions through the network management server. It can avoid download congestion caused by insufficient network management export resources, and can further increase the download rate of the base station version.

The number of base stations in each batch that simultaneously download the base station version through the network management server can be determined based on the secure file transfer protocol (SFTP) concurrency number set by the network management server. The SFTP concurrency number can be configured in advance on the network management server.

Step 102, after receiving a message that the base station version is successfully downloaded reported by the first base station, adding the first base station to the seed base station list.

The first base station successfully downloads the base station version and reports to the network management server a message that the base station version is successfully downloaded. The network management server adds the first base station to the seed base station list. The seed base station involved here refers to a base station that has completed the base station version download and can provide base station version download services to other base stations to be downloaded.

After receiving the message from the first base station that the base station version is successfully downloaded, the network management server automatically releases the SFTP resources occupied by the first base station.

Step 103, scheduling the base station to be downloaded to download the base station version through the base station in the seed base station list, and after receiving a message that the base station version is successfully downloaded reported by the base station to be downloaded, adding the base station to be downloaded to the seed base station list.

In this step, the network management server schedules the base station to be downloaded to download the base station version through the base station in the seed base station list, which can realize the mutual transmission of base station versions between base stations. As long as it completes the download of the base station version, it becomes a seed base station and can provide the base station version for the base station to be downloaded to download the base station version.

Repeating step 103 before all base stations to be downloaded complete the download of the base station version. That is, each base station to be downloaded downloads the base station version through the seed base station, and becomes a seed base station after the download is completed, until all base stations complete download of the base station version. In this process, as the number of base stations in the seed base station list increases, concurrent download capacity of the base station version can increase nearly exponentially, thereby subversively improving the version download efficiency.

In addition, the download service provided by the seed base station to the base station to be downloaded may be multi-threaded. That is, multiple base stations to be downloaded can simultaneously download base station versions through the same seed base station. This can further improve the download efficiency of the base station version. The number of concurrent threads of the download service provided by the seed base station involved here can be configured through the network management server.

Furthermore, the mutual transmission of base station versions between base stations requires ensuring that the transmission links between the base stations are interoperable. Therefore, before the base station to be downloaded downloads the base station version through the base station in the seed base station list, an SFTP connection between base stations needs to be established. The configuration interface can be called by the network management server to automatically configure the operation and maintenance channel for nodeB (OMCB, base station operation and maintenance channel) between base stations. After completing the configuration of the OMCB channel between base stations, the base stations to be downloaded are scheduled to download the base station version through the base stations in the seed base station list.

After the base station to be downloaded successfully downloads the base station version through the base station in the seed base station list, the network management server can automatically call the configuration interface to delete the OMCB channel between the base station to be downloaded and the seed base station.

In addition, the base station to be downloaded may also fail to download the base station version through the seed base station, which may be due to abnormal operation of the seed base station. In this case, the base station to be downloaded can wait in line to download the base station version through the network management server after trying to download through the seed base station several times but still failing.

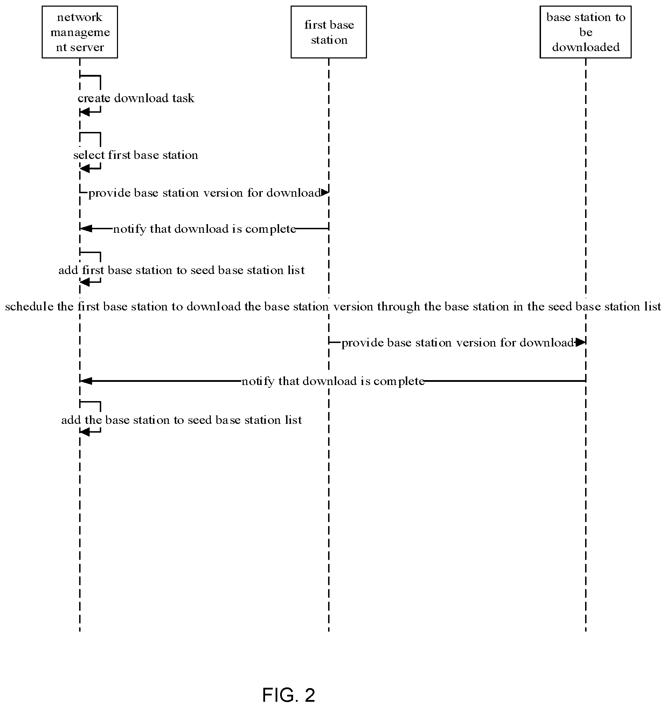

To better understand the method for downloading the base station version provided in this embodiment, a schematic interaction flow diagram shown in FIG. 2 can be referred to.

In this embodiment, the network management server selects the first base station among all base stations and provides the base station version for the first base station to download. After receiving the message that the base station version is successfully downloaded reported by the first base station, the network management server adds the first base station to the seed base station list, and then schedules the base stations to be downloaded to download the base station version through the base stations in the seed base station list. Only some of the selected base stations are allowed to download the base station version through the network management server, so that the remaining base stations to be downloaded download the base station version through the base stations in the seed base station list. Compared with the traditional method in which all base stations download the base station version through the network management server, it can effectively save the export resources of the network management server. In addition, compared with the download method where a large number of base stations occupy the network management export resources, the download speed can also be effectively improved. In addition, after receiving the message that the base station version is successfully downloaded reported by the base station to be downloaded, the network management server adds the base station to be downloaded to the seed base station list. This enables the base stations that have completed download of the base station version to become seed base stations that provide base station versions for download, thereby enabling each base station to be downloaded to simultaneously download the base station version through multiple base stations in the seed base station list. This can significantly shorten the time required to download the base station version and improve the download efficiency of base station version. Furthermore, the above process does not require the participation of technical personnel and can greatly reduce the consumption of manpower.

Another embodiment of the present application relates to a method for downloading a base station version, which is applied to a network management server. This embodiment is roughly the same as the previous embodiment. The main difference is that in this embodiment, selecting the first base station among all base stations includes: dividing all base stations into at least one group according to the base station version required by each base station, and selecting one base station in the group as the first base station.

In this embodiment, scheduling the base station to be downloaded to download the base station version through the base station in the seed base station list can include: determining a target base station in the seed base station list according to the group to which the base station to be downloaded belongs, the target base station and the base station to be downloaded belong to the same group; and scheduling the base station to be downloaded to download the base station version through the target base station.

The target base station here is the seed base station that belongs to the same group as the base station to be downloaded. The seed base station is shared within the group for all base stations to be downloaded and can only be used in the same group.

Because the base station version file required by the base station is determined based on the actual configuration of the base station. Each base station with different configurations (including hardware configuration, wireless configuration, etc.) may require different version files. Therefore, before downloading the base station version, the base stations need to be grouped according to their required base station versions to ensure that the version files downloaded by each base station through the seed base station in the group are accurate and complete.

In this embodiment, dividing all base stations into at least one group according to the base station version required by each base station, and selecting one base station in each group as the first base station can include: dividing base stations that require the same base station version among all base stations into one group, and randomly selecting one base station as the first base station in each group; or, according to the inclusion relationship of the base station versions required by each base station in all the base stations, dividing all base stations into at least one group, and selecting the base station with the most base station version files required in each group as the first base station. The base station version files in the group that are not required by the first base station are included the base station version file required by the first base station in the same group.

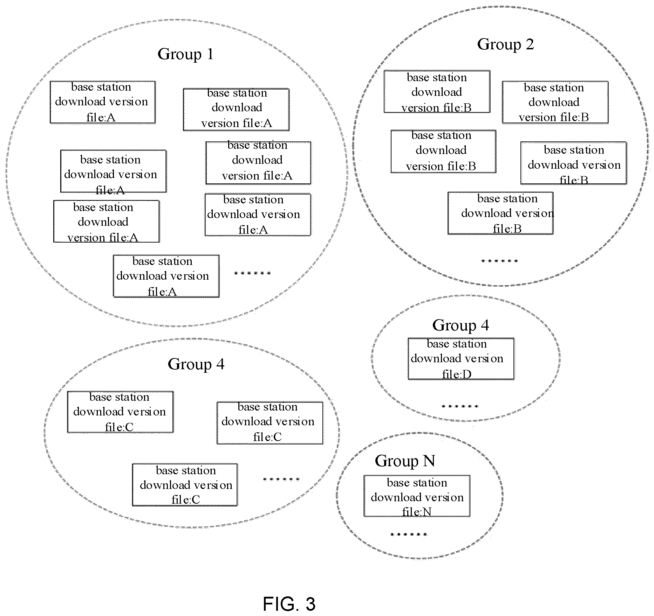

In order to better understand the first grouping method, that is, the base stations with the same base station version required among all the base stations are grouped into one group, the first grouping method is described using a schematic diagram of base station grouping as shown in FIG. 3. As shown in FIG. 3, each base station whose required base station version is A is divided into group 1, each base station whose required base station version is B is divided into group 2, and the same applies to the other groups.

For the base stations in each of the above groups, since the base station version files required by each base station are the same, using any one of them as the first base station can meet the download requirements of each non-first base station. Therefore, it is sufficient if a base station is randomly selected as the first base station in each group.

For the first grouping method, during actual implementation, the network management server can issue instructions to report the required base station version files to each base station after creating a base station version download task. After collecting the file list of required base station versions reported by all base stations, the network management server groups the base stations.

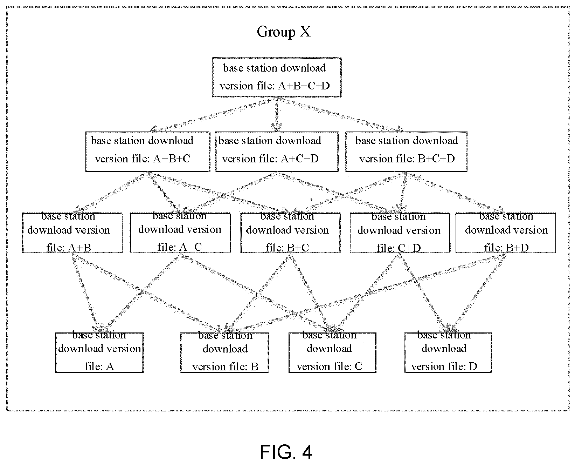

In order to better understand the second grouping method, that is, the grouping method in which all base stations are divided into at least one group according to the inclusion relationship of the base station versions required by each base station in all base stations, the second grouping method is described using a schematic diagram of base station grouping as shown in FIG. 4.

As shown in FIG. 4, since the base station version file A+B+C is a subset of the base station version file A+B+C+D, the required base station version file A+B+C can be grouped in the same group as the required base station version file A+B+C+D. In the same way, base stations whose required base station version files are A+B+D, A+C or A can also be divided into this group. The base station whose required version file is A+B+C+D is selected as the first base station, which can ensure that each base station in this group can download and obtain the required base station version file.

As the number of seed base stations increases, the rate at which all base stations download base station versions can increase almost exponentially. Since the seed base station can only share the base station version file with the base stations to be downloaded in the group to which it belongs, when each base station needs to be grouped, the smaller the number of groups, the higher the download rate that can be achieved. The second grouping method is more complex than the previous grouping method, but it can greatly reduce the number of groups. Accordingly, the time required for all base stations to download the base station version can be shortened and the download efficiency of the base station can be improved.

After the base stations are grouped using the second grouping method, the network management server needs to pair the base station to be downloaded with the seed base station before proceeding with the step of enabling the base station to be downloaded to download the base station version through the seed base station. The network management server allocates seed base stations to the base stations in a hierarchical order from bottom to top according to the hierarchical level in the same group as shown in FIG. 4. As long as the seed base station contains all the version files required by the base station to be downloaded, the paired download can be performed. Taking the base station shown in FIG. 4 as an example, the network server can assign the base station whose required version file is A+B+D to the base station whose required version file is A+B+C+D as the seed base station of the base station.

For the first grouping method, during actual implementation, the network management server can issue instructions to report the required base station version files to each base station after creating a base station version download task. After collecting the file list of required base station versions reported by all base stations, the network management server sorts each base station according to the number of base station version files required by each base station from large to small, and groups the base stations that have an inclusion relationship in the required base station version files into a group. Each base station that has intersection or does not have intersection is divided into different groups.

The transmission of base station version files between base stations relies on the inter-station SFTP link. Therefore, it is necessary to ensure that the transmission links between base stations in the group are interoperable. In one example, before dividing all base stations into at least one group according to the base station version required by each base station, the network management server can also detect and determine that the transmission links between any two base stations in the group are interoperable; or the transmission link detection script can also be used to detect and determine that the transmission links between any two base stations in the group are interoperable.

Using the transmission link detection script independently developed can reduce the load brought by transmission link detection on the network management server. The transmission link detection script can be used to regularly collect the transmission link status between stations in the network (for example, execute the script at 2:00 a.m. every day). The collected results are then reported to the network management server, so that the network management server can refer to the transmission link interoperability between the base stations when grouping the base stations.

In addition, before providing the base station version for the first base station to download, it is also possible to: determine the SFTP download resources assigned to each first base station according to the number of base stations in the group to which each first base station belongs. The first base station uses the SFTP download resources to download the base station version.

That is, the network management server allocates the SFTP download resources to each first base station in proportion according to the number of base stations in the group. This ensures that groups with a larger number of base stations can obtain more network management SFTP resources.

When the network management server divides each first base station into multiple batches to download the base station version, after the first batch of first base stations are downloaded through the network management server, the base station can release the SFTP resources occupied by these first base stations and allocates these SFTP resources to the first base station of subsequent batches in proportion.

The method for downloading the base station version involved in this embodiment is an improvement of the previous embodiment, so the relevant technical details disclosed in the previous embodiment are still valid in this embodiment. To reduce duplication, they will not be described again here.

The method for downloading the base station version involved in this embodiment can ensure that each base station can download and obtain the required base station version file. In addition, it has been verified that the download efficiency of the base station version can be improved from 6h to 9h/2000 stations of the traditional download solution to 1 h/2000 stations. This effectively shortens the time required to download the base station version and increases the download rate of the base station version. In addition, it solves the problem of consuming human resources and huge network management export resources in the traditional methods.

Another embodiment of the present application relates to a method for downloading the base station version, which is applied to a base station.

In this embodiment, the base station downloads the base station version through the network management server; reports a message that the base station version is successfully downloaded to the network management server, so that the network management server can add the base station to the seed base station list; and provides the downloaded base station version for the base station to be downloaded to download the base station version through the base station. After the base station to be downloaded successfully downloads the base station version, it is added to the seed base station list.

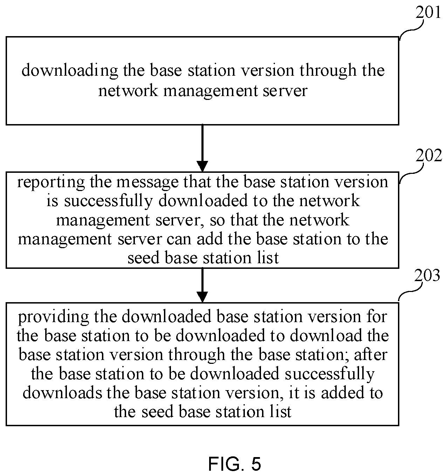

The implementation details of the method for downloading the base station version in this embodiment will be described in detail below. The following content is only for the convenience of understanding the implementation details of this solution and is not necessary for implementing this solution. The specific process is shown in FIG. 5, which can include the following steps.

Step 201, downloading the base station version through the network management server.

Step 202, reporting the message that the base station version is successfully downloaded to the network management server, so that the network management server can add the base station to the seed base station list.

Step 203, providing the downloaded base station version for the base station to be downloaded to download the base station version through the base station; after the base station to be downloaded successfully downloads the base station version, it is added to the seed base station list.

The method for downloading the base station version applied to the base station in this embodiment is applicable to base stations of all standards, which is not limited in this embodiment.

The execution subject of the method for downloading the base station version involved in this embodiment is the first base station involved in the foregoing embodiment, and the relevant technical details disclosed in the foregoing embodiment are still valid in this embodiment. To reduce duplication, they will not be repeated here.

In this embodiment, the base station downloads the base station version through the network management server. Then, a message that the base station version is successfully downloaded is reported to the network management server, so that the network management server can add the base station to the seed base station list. In an embodiment, the base station can serve as a seed base station to provide a downloaded base station version for the base station to be downloaded to download the base station version through the base station. Compared with the traditional method in which all base stations download the base station version through the network management server, the export resources of the network management server can be effectively saved. In addition, compared with the download method where a large number of base stations occupy the network management export resources, the download speed can also be effectively improved. After the base station to be downloaded successfully downloads the base station version, it is added to the seed base station list. This enables the base stations that have completed downloading the base station version to become seed base stations that provide base station versions for download, thereby enabling each base station to be downloaded to simultaneously download the base station version through multiple base stations in the seed base station list. It can significantly shorten the time required to download the base station version and improve the download efficiency of the base station version. Furthermore, the above process does not require the participation of technical personnel and can greatly reduce the consumption of manpower.

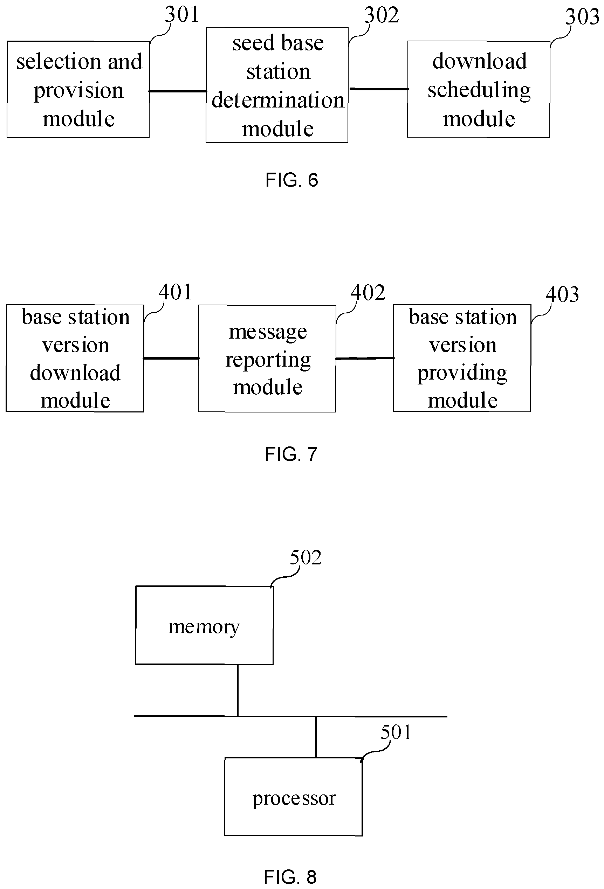

An embodiment of the present application relates to a network management server, as shown in FIG. 6, including a selection and provision module 301, a seed base station determination module 302 and a download scheduling module 303.

The selection and provision module 301 is configured to select the first base station among all base stations and provide the base station version for the first base station to download.

The seed base station determination module 302 is configured to add the first base station to the seed base station list after receiving a message reported by the first base station that the base station version is successfully downloaded.

The download scheduling module 303 is configured to schedule the base station to be downloaded to download the base station version through the base station in the seed base station list, and add the base station to be downloaded to the seed base station list after receiving the message that the base station version is successfully downloaded reported by the base station to be downloaded.

In an example, the selection and provision module 301 can also be configured to divide all base stations into at least one group according to the base station version required by each base station, and select one base station in the group as the first base station. In this example, the download scheduling module 303 can also be configured to determine the target base station in the seed base station list according to the group to which the base station to be downloaded belongs, and schedule the base station to be downloaded to download the base station version through the target base station. The target base station and the base station to be downloaded belong to the same group.

In an example, the selection and provision module 301 can also be configured to divide the base stations with the same base station version required among all the base stations into a group, and randomly select one base station as the first base station in each group; or divide all the base stations into at least one group according to the inclusion relationship of the base station version files required by each base station in all the base stations, and select the base station with the most base station version files required in each of the groups as the first base station. The files of the base station version required by the non-first base station in the group are included in the files of the base station version required by the first base station in the same group.

In an example, the network management server can also include a transmission link detection module (not shown in the figure), configured to detect and determine that the transmission links between any two base stations in the group are interoperable through the network management server before dividing all base stations into at least one group according to the base station version required by each base station; or to detect and determine that the transmission links between any two base stations in the group are interoperable using the transmission link detection script.

In an example, the network management server can further include a network management resource allocation module (not shown in the figure), configured to, before providing the base station version for the first base station to download, determine the SFTP download resources allocated to each first base station according to the number of base stations in the group to which each first base station belongs. The first base station uses the SFTP download resources to download the base station version.

The relevant technical details in the foregoing embodiments are still valid in this embodiment. To reduce duplication, they will not be repeated here.

The network management server provided in this embodiment selects the first base station among all base stations and provides the base station version for the first base station to download. After receiving the message that the base station version is successfully downloaded reported by the first base station, the network management server adds the first base station to the seed base station list, and then schedules the base stations to be downloaded to download the base station version through the base stations in the seed base station list. Only some of the selected base stations are allowed to download the base station version through the network management server, so that the remaining base stations to be downloaded download the base station version through the base stations in the seed base station list. Compared with the traditional method in which all the base stations download the base station version through the network management server, the export resources of the network management server can be effectively saved. In addition, compared with the download method where a large number of base stations occupy network management export resources, it can also effectively increase the download speed. In addition, after receiving the message that the base station version is successfully downloaded reported by the base station to be downloaded, the network management server adds the base station to be downloaded to the seed base station list. This enables the base stations that have completed downloading the base station version to become seed base stations that provide base station versions for download, thereby enabling each base station to be downloaded to simultaneously download the base station version through multiple base stations in the seed base station list. It can significantly shorten the time required to download the base station version and improve the download efficiency of base station version. Furthermore, the above process does not require the participation of technical personnel and can greatly reduce the consumption of manpower.

Another embodiment of the present application relates to a base station, as shown in FIG. 7, including a base station version download module 401, a message reporting module 402 and a base station version providing module 403.

The base station version download module 401 is configured to download the base station version through the network management server.

The message reporting module 402 is configured to report a message that the base station version is successfully downloaded to the network management server, so that the network management server can add the base station to the seed base station list.

The base station version providing module 403 is configured to provide the downloaded base station version for the base station to be downloaded to download the base station version through the base station; after the base station to be downloaded successfully downloads the base station version, it is added to the seed base station list.

The base station involved in this embodiment is the first base station involved in the previous embodiment, and the relevant technical details in the previous embodiment are still valid in this embodiment. To reduce duplication, they will not be repeated here.

The base station provided in this embodiment downloads the base station version through the network management server. Then, a message that the base station version is successfully downloaded is reported to the network management server, so that the network management server can add the base station to the seed base station list. In an embodiment, the base station can serve as a seed base station to provide a downloaded base station version for the base station to be downloaded to download the base station version through the base station. Compared with the traditional method in which all the base stations download the base station version through the network management server, the export resources of the network management server can be effectively saved. And compared with the download method in which a large number of base stations occupy the network management export resources, the download speed can also be effectively improved. After the base station to be downloaded successfully downloads the base station version, it is added to the seed base station list. This enables the base stations that have completed downloading the base station version to become seed base stations that provide base station versions for download, thereby enabling each base station to be downloaded to simultaneously download the base station version through multiple base stations in the seed base station list. It can significantly shorten the time required to download the base station version and improve the download efficiency of base station version. Furthermore, the above process does not require the participation of technical personnel and can greatly reduce the consumption of manpower.

Each module involved in the above embodiments of the present application is a logical module. In practical applications, a logical unit can be a physical unit, or a part of a physical unit, or implemented as a combination of multiple physical units. In addition, in order to highlight the innovative part of the present application, units that are not closely related to solving the technical problems raised in the present application are not introduced in this embodiment, but this does not mean that other units do not exist in this embodiment.

An embodiment of the present application also provides an electronic device, as shown in FIG. 8, including at least one processor 501; and a memory 502 communicated with the at least one processor 501. An instruction that can be executed by the at least one processor 501 is stored in the memory 502. The instruction is executed by the at least one processor 501 to enable the at least one processor 501 to perform the method for downloading the base station version as described above.

The memory 502 and the processor 501 are connected using a bus. The bus can include any number of interconnected buses and bridges. The bus connects various circuits of one or more processors 501 and the memory 502 together. The bus can also connect various other circuits such as peripheral devices, voltage regulators, and power management circuits together, which are all well known in the art and therefore will not be described further herein. The bus interface provides the interface between the bus and a transceiver. The transceiver can be one element or multiple elements, such as multiple receivers and transmitters, providing a unit for communicating with various other devices over a transmission medium. The data processed by the processor 501 is transmitted on the wireless medium through the antenna. Furthermore, the antenna also receives the data and transmits the data to the processor 501.

The processor 501 is responsible for managing the bus and general processing, and can also provide a variety of functions, including timing, peripheral interfaces, voltage regulation, power management, and other control functions. The memory 502 can be used to store data used by the processor 501 when performing operations.

The above-mentioned products can perform the methods provided in the embodiments of the present application and have functional modules and beneficial effects corresponding to the execution methods. For technical details not described in detail in this embodiment, please refer to the methods provided in the embodiments of the present application.

An embodiment of the present application also provides a computer-readable storage medium on which a computer program is stored. When the computer program is executed by the processor, the above method for downloading the base station version is implemented.

Those skilled in the art can understand that all or part of the steps in the methods of the above embodiments can be completed by instructing relevant hardware through a program. The program is stored in a storage medium and includes several instructions to cause a device (which can be a microcontroller, a chip, etc.) or a processor to perform all or part of the steps of the methods described in various embodiments of the present application. The aforementioned storage media include: U disk, mobile hard disk, read-only memory (ROM), random access memory (RAM), magnetic disk or optical disk and other media that can store program code.

The above embodiments are provided for those skilled in the art to implement and use the present application. Those skilled in the art can make various modifications or changes to the above embodiments without departing from the inventive concept of the present application. Therefore, the scope of the present application is not limited to the above embodiments, but is to be accorded the widest scope consistent with the inventive features claimed herein.

## Claims

1. A method for downloading a base station version, applied to a network management server, **characterized by** comprising:
selecting a first base station among all base stations and providing a base station version for the first base station to download;
after receiving a message that the base station version is successfully downloaded reported by the first base station, adding the first base station to a seed base station list; and
scheduling a base station to be downloaded to download the base station version through the base station in the seed base station list, and after receiving the message that the base station version is successfully downloaded reported by the base station to be downloaded, adding the base station to be downloaded to the seed base station list.

2. The method for downloading the base station version according to claim 1, wherein the selecting the first base station among all base stations comprises:
dividing all the base stations into at least one group according to the base station version required by each base station, and selecting one base station as the first base station in the group;
the scheduling the base station to be downloaded to download the base station version through the base station in the seed base station list comprises:
determining a target base station in the seed base station list according to a group to which the base station to be downloaded belongs, wherein the target base station and the base station to be downloaded belong to a same group; and
scheduling the base station to be downloaded to download the base station version through the target base station.

3. The method for downloading the base station version according to claim 2, wherein the dividing all the base stations into at least one group according to the base station version required by each base station, and selecting one base station as the first base station in each of the groups comprises:
dividing base stations with a same base station version required among all the base stations into one group, and randomly selecting one base station as the first base station from each of the groups; or
dividing all the base stations into at least one group, and selecting a base station with the most base station version files required in each of the groups as the first base station, according to an inclusion relationship of base station versions required by each base station in all the base stations;
wherein base station version files in the group that are not required by the first base station are included in the base station version files that are required by the first base station in a same group.

4. The method for downloading the base station version according to claim 2 or 3, wherein before dividing all the base stations into at least one group according to the base station version required by each base station, the method further comprises:
detecting and determining, through the network management server, that transmission links between any two base stations in the group are interoperable; or
detecting and determining, through a transmission link detection script, that transmission links between any two base stations in the group are interoperable.

5. The method for downloading the base station version according to claim 2, wherein before providing the base station version for the first base station to download, the method further comprises:
determining secure file transfer protocol (SFTP) download resources allocated to each first base station according to a number of base stations in the group to which each first base station belongs, wherein the first base station uses the SFTP download resources to download the base station version.

6. A method for downloading a base station version, applied to a base station, **characterized by** comprising:
downloading, through a network management server, a base station version;
reporting a message that the base station version is successfully downloaded to the network management server, so that the network management server adds the base station to a seed base station list; and
providing the downloaded base station version for a base station to be downloaded to download the base station version through the base station, wherein after successfully downloading the base station version, the base station to be downloaded is added to the seed base station list.

7. A network management server, **characterized by** comprising:
a selection and provision module, configured to select a first base station among all base stations and provide a base station version for the first base station to download;
a seed base station determination module, configured to add the first base station to a seed base station list after receiving a message that the base station version is successfully downloaded reported by the first base station; and
a download scheduling module, configured to schedule a base station to be downloaded to download the base station version through a base station in the seed base station list, and add the base station to be downloaded to the seed base station list after receiving the message that the base station version is successfully downloaded reported by the base station to be downloaded.

8. A base station, **characterized by** comprising:
a base station version download module, configured to download a base station version through a network management server;
a message reporting module, configured to report a message that the base station version is successfully downloaded to the network management server, so that the network management server adds the base station to a seed base station list; and
a base station version providing module, configured to provide the downloaded base station version for a base station to be downloaded to download the base station version through the base station, wherein after successfully downloading the base station version, the base station to be downloaded is added to the seed base station list.

9. An electronic device, **characterized by** comprising:
at least one processor; and
a memory communicated with the at least one processor;
wherein an instruction executable by the at least one processor is stored in the memory and is executed by the at least one processor to allow the at least one processor to perform the method for downloading the base station version according to any one of claims 1 to 6.

10. A computer-readable storage medium, **characterized in that** a computer program is stored in the computer-readable storage medium, wherein when the computer program is executed by a processor, the method for downloading the base station version according to any one of claims 1 to 6 is implemented.
